Europäisches Patentamt

**European Patent Office**

Office européen des brevets

(11) Veröffentlichungsnummer: **0 228 469**
**B1**

(12) **EUROPÄISCHE PATENTSCHRIFT**

(45) Veröffentlichungstag der Patentschrift: **28.11.90**

(21) Anmeldenummer: **85905942.0**

(22) Anmeldetag: **28.06.85**

(86) Internationale Anmeldenummer:
**PCT/SU85/00056**

(87) Internationale Veröffentlichungsnummer:
**WO 87/00104 15.01.87 Gazette 87/01**

(51) Int. Cl.⁵: **B 23 P 6/00**

(54) **VERFAHREN ZUM WIEDERHERSTELLEN HEBELARTIGER BOGENFÖRMIGER TEILE.**

(43) Veröffentlichungstag der Anmeldung:
**15.07.87 Patentblatt 87/29**

(45) Bekanntmachung des Hinweises auf die
Patenterteilung:
**28.11.90 Patentblatt 90/48**

(84) Benannte Vertragsstaaten:
**DE FR IT SE**

(56) Entgegenhaltungen:
CH-A- 142 381
DE-C- 712 710
SU-A- 569 363
SU-A- 683 882
SU-A-1 063 572

(73) Patentinhaber: **VOLZHSKOE OBIEDINENIE PO PROIZVODSTVU LEGKOVYKH AVTOMOBILEI (AVTOVAZ)**
**ul. Belorusskaya 16**
**Tolyatti, 445633 (SU)**

(72) Erfinder: **GAIDUK, Valery Vladimirovich**
**ul. Revoljutsionnaya, 56-218**
**Tolyatti, 445028 (SU)**
Erfinder: **KARATEEV, Jury Alexandrovich**
**ul. Belorusskaya, 25-42**
**Tolyatti, 445002 (SU)**
Erfinder: **VASILIEV, Jury Pavlovich**
**pr. Moskovsky, 27-49**
**Tolyatti, 445038 (SU)**
Erfinder: **BEZBORODOV, Gennady Vasilievich**
**pr. Leninsky, 191-87**
**Tolyatti, 445030 (SU)**
Erfinder: **OSIPOV, Alexei Fedotovich**
**ul. Frunze, 21-35**
**Tolyatti, 445031 (SU)**
Erfinder: **MENDEL, Alexandr Minovich**
**ul. Sverdlova, 48-19**
**Tolyatti, 445036 (SU)**
Erfinder: **AFANASIEV, Evgeny Vasilievich**
**pr. Zeleny, 164-115**
**Tolyatti, 445051 (SU)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP  0 228 469  B1**

(72) Erfinder: **FRIDMAN, Jury Abramovich**
**bulvar Baumana, 10-78**
**Tolyatti, 445038 (SU)**
Erfinder: **ZHESTKOV, Vladimir Alexeevich**
**ul. K. Marxa, 44-40**
**Tolyatti, 445011 (SU)**
Erfinder: **KOSORUKOV, July Leontievich**
**ul. Leonidze, 5-26**
**Kutaisi, 384003 (SU)**

(74) Vertreter: **Finck, Dieter et al**
**Patentanwälte v. Füner, Ebbinghaus, Finck**
**Mariahilfplatz 2 & 3**
**D-8000 München 90 (DE)**

## Beschreibung

Die Erfindung betrifft ein Verfahren zur Wiederherstellung eines gekrümmten, hebelartigen Gegenstands, bei dem der Gegenstand auf eine Matrize einer Gesenkpresse gelegt und dann während eines Pressenhubs von einem Stempel der Gesenkpresse so belastet wird, daß Werkstoff des Gegenstands in Verschleißbereiche des Gegenstands verdrängt wird.

Bei einem solchen, aus der CH-A-142 381 bekannten Verfahren werden Laschen für Eisenbahnschienen im warmen Zustand zwischen Stempel und Matrize der presse angeordnet. Anschließend wird durch die Stempelbelastung Material der Lasche so lange quer zur Belastungsrichtung des Stempels in seitliche Verschleißbereiche verdrängt, bis der durch die Matrize abgegrenzte Raum gefüllt ist. Mit diesem Verfahren ist es jedoch nicht möglich, Material in zwei Verschleißbereiche eines gekrümmten, hebelartigen Gegenstandes zu verdrängen, die sich auf der dem Stempel zugewandten Seite bzw. der Matrize zugewandten Seite des hebelartigen Gegenstandes befinden. Zudem muß die Lasche gemäß dem bekannten Verfahren vor ihrer Warmverformung auf eine entsprechende Temperatur erwärmt werden.

Der Erfindung liegt die Aufgabe zugrunde, ein Verfahren zur Wiederherstellung von gekrümmten, hebelartigen Gegenständen zu schaffen, mit dem zwei einem Stempel bzw. einer Matrize einer Gesenkpresse zugewandte Verschleißbereiche werkstoffsparend berichtigt werden können.

Diese Aufgabe wird ausgehend vom gattungsgemäßen Stand der Technik erfindungsgemäß dadurch gelöst, daß die Belastung des Gegenstandes durch den Stempel beidseitig und in der Nähe eines dem Stempel zugewandten Verschleißbereiches erfolgt, daß der Gegenstand durch die Belastung in einem ersten Belastungsschritt um eine dem einen Verschleißbereich gegenüberliegende Auflagefläche der Matrize gebogen wird, wodurch Werkstoff des Gegenstands in den einen Verschleißbereich verdrängt wird, und daß ein weiterer, der Matrize zugewandter Verschleißbereich des Gegenstandes durch die Belastung in einem darauffolgenden zweiten Belastungschritt solange in ein Formstück gepreßt wird, bis der weitere Verschleißbereich dessen Form angenommen hat. Anschließend wird der eine Verschleißbereich des Gegenstandes mechanisch bearbeitet.

Durch das erfindungsgemäße Verfahren ist es möglich, zwei einem Stempel bzw. einer Matrize einer Gesenkpresse zugewandte Verschleißbereiche werkstoffsparend durch Kaltverformung berichtigen zu können.

Dabei entspricht die Qualität des wiederhergestellten Gegenstandes der Qualität eines Neuteils.

Ein Ausführungsbeispiel der Erfindung wird anhand von Zeichnungen näher erläutert. Es zeigen:

Fig. 1 einen Querschnitt durch ein Gesenk und
Fig. 2 den Schnitt II-II von Fig. 1.

Ein Verfahren zur Wiederherstellung von gekrümmten, hebelartigen Gegenständen wird anhand einer Wiederherstellung eines aus Stahl gefertigten Ventilantriebshebels 1 eines Pkws erläutert.

Zuerst werden die Hebel 1 ausgemustert, bei denen die mit mit dem Steuernocken kontaktierende Oberfläche über 1,0mm abgenutzt ist. Danach werden die übriggebliebenen Hebel 1 gewaschen, bei einer Temperatur von 820°C eine Stunde lang geglüht, zwei Stunden lang auf 250 bis 300°C abgekühlt und ihre Härte unter Sortierung der Hebel 1 in drei Gruppen je nach der Spitzenbreite geprüft.

Die geglühten Hebel werden auf einer hydraulischen Presse mit einer Preßkraft von 25 bis 30 t im Gesenk gebogen.

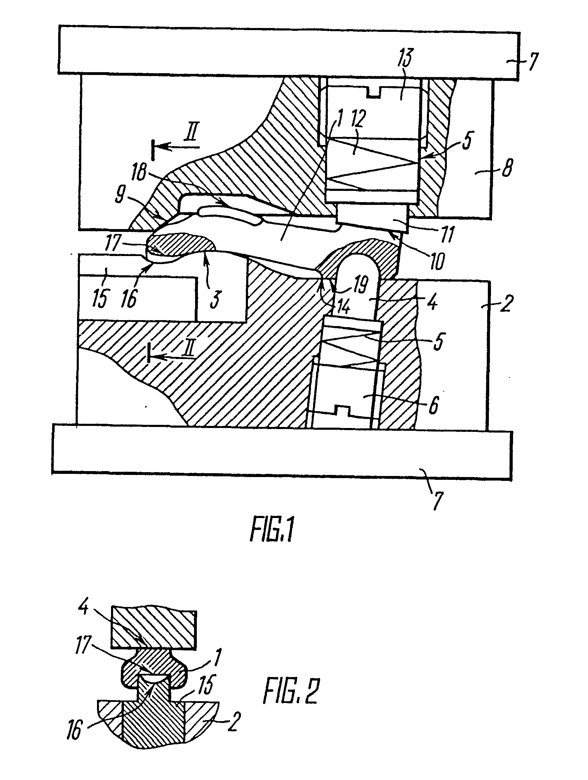

Für das Biegen wird ein Hebel 1 (Fig. 1) auf einer Matrize 2 einer Presse auf eine Auflagefläche 3 und einen Aufnehmer 4 gelegt, der durch ein elastisches Element 5 abgefedert ist, das sich auf einer Stellschraube 6 abstützt. Die Matrize 2 ist am Unterteil des Gesenks 7 befestigt.

Am Oberteil des Gesenks 7 ist ein Stempel 8 befestigt, der zwei Arbeitsflächen 9 und 10 aufweist, die eine Kraft auf den Hebel übertragen. Die Arbeitsfläche 10 ist die Oberfläche eines Niederhalters 11 des Stempels 8, die durch ein elastisches Element 12 abgefedert ist, das sich auf einer Stellschraube 13 abstützt. Die Matrize 2 weist eine Auflagefläche 14 und ein einsetzbares Formstück 15 mit einer formgebenden Oberfläche 16 auf (Fig. 1 und 2). Das Formstück 15 befindet sich in der Nähe eines wiederherzustellenden Verschleißbereiches 17 des Hebels 1. Ein anderer wiederherzustellender Verschleißbereich 18 (Fig. 1) des Hebels befindet sich auf der zur Auflagefläche 3 entgegengesetzten Seite.

Die Verschleißbereiche 17 und 18 des Hebels 1 werden folgendermaßen wiederhergestellt:

Bei einem Arbeitshub der Presse wirkt der Stempel 8 mit seinen Arbeitsflächen 9 und 10 auf den Hebel 1 ein und biegt ihn um die Auflagefläche 3 der Matrize 2. Der Arbeitshub dauert so lange, bis eine Oberfläche 19 des Hebels 1 sich auf die Auflagefläche 14 der Matrize 2 gelegt hat und der Aufnehmer 4 versenkt ist, wobei das elastische Element 5 zusammengedrückt wird. Gleichzeitig berührt der Verschleißbereich 17 (Fig. 2) des Hebels 1 die formgebende Oberfläche 16 des Formstücks 15 der Matrize 2.

Es findet eine Verschiebung des Verschleißbereiches 17 der Oberfläche 19 des Hebels 1 relativ zum Verschleißbereich 18 (Fig. 1), d.h. eine relative Verschiebung des an den Verschleißbereich 18 anschließenden Bereichs nach oben und ein Füllen dieses Verschleißbereichs 18 mit dem Werkstoff des Hebels selber unter Ausbildung einer Zugabe für die weitere mechanische Bearbeitung statt.

Bei einer weiteren Abwärtsbewegung des Stempels 8 findet eine Werkstoffzufuhr aus dem Bereich, der an den Verschleißbereich 18 des Hebels 1 anschließt, zum Formstück 15 hin, dessen Oberfläche 16 die Form des Ausgangsteils hat, so lange statt, bis der Verschleißbereich 18 die Abmessungen des Ausgangsteils angenommen hat.

In diesem Augenblick wird das elastische Element 12 des Stempels 8 zusammengedrückt, wodurch ein Plattdrücken der Oberfläche 19 des Hebels 1 auf der Auflagefläche 14 der Matrize verhindert wird.

Nach dem Biegen wird der Hebel 1 kontrolliert, auf eine Temperatur von 820°C erhitzt und in Öl gehärtet. Danach wird der Hebel 1 gewaschen und seine Härtungsqualität durch Härtebestimmung nach einem beliebigen bekannten Verfahren überprüft. Anschließend wird der Hebel 1 auf einer Flachschleifmaschine zur Wiederherstellung der Arbeitsfläche geschliffen, die mit dem Steuernocken in Kontakt tritt.

Nach dem Schleifen wird der Hebel 1 gewaschen, seine Schleifgüte geprüft und bei einer Temperatur von 575°C 4 Stunden lang gasnitriert. Anschließend werden die fertigen Hebel 1 geprüft.

## Patentanspruch

Verfahren zur Wiederherstellung eines gekrümmten hebelartigen Gegenstandes (1), bei dem der Gegenstand (1) auf eine Matrize (2) einer Gesenkpresse (7) gelegt und dann während eines Pressenhubs von einem Stempel (8) der Gesenkpresse (7) so belastet wird, daß Werkstoff des Gegenstands (1) in Verschleißbereiche (17, 18) des Gegenstands (1) verdrängt wird, dadurch gekennzeichnet,

daß die Belastung des Gegenstandes (1) durch den Stempel (8) beidseitig und in der Nähe eines dem Stempel (8) zugewandten Verschleißbereiches (18) erfolgt,

daß der Gegenstand durch die Belastung in einem ersten Belastungsschritt um eine dem einen Verschleißbereich (18) gegenüberliegende Auflagefläche (3) der Matrize (2) gebogen wird, wodurch Werkstoff des Gegenstands (1) in den einen Verschleißbereich (18) verdrängt wird, und

daß ein weiterer, der Matrize (2) zugewandter Verschleißbereich (17) des Gegenstandes (1) durch die Belastung in einem darauffolgenden zweiten Belastungsschritt solange in ein Formstück (15) gepreßt wird, bis der weitere Verschleißbereich (17) dessen Form angenommen hat und daß der eine Verschleißbereich (18) des Gegenstandes (1) anschließend mechanisch bearbeitet wird.

## Revendication

Procédé de regarnissage d'un objet courbé en forme de levier (1), du type où l'objet (1) est placé sur une matrice (2) d'une presse à estamper (7) et ensuite, pendant une course de la presse, est chargé par un poinçon (8) de la presse à estamper (7) de manière que le matériau de l'objet (1) soit déplacé vers les zones d'usure (17, 18) de l'objet (1), caractérisé

en ce que la charge de l'objet (1) par le poinçon (8) se produit des deux côtés et à proximité d'une zone d'usure (18) tournée vers le poinçon (8),

en ce que l'objet est courbé par la charge en une première étape de charge, autour d'une surface d'appui (3) de la matrice (2) face à la zone d'usure (18) et le matériau de l'objet (1) est déplacé vers ladite zone d'usure (18), et

en ce qu'une autre zone d'usure (17) de l'objet (1) tournée vers la matrice (2) est pressée par la charge dans une seconde étape de charge subséquente, en une pièce profilée (15), jusqu'à l'autre zone d'usure (17) dont la forme a pris corps, et

en ce que la zone d'usure (18) de l'objet (1) est ensuite mécaniquement usinée.

## Claim

Method for refurbishing a curved lever-like object (1), wherein the object (1) is placed onto a matrix (2) of a forging press (7) and then during a pressing stroke is loaded by a die (8) of the forging press (7) in such a manner that the material from which the object (1) is made is displaced into worn regions (17, 18) of the object (1), characterised in

that the loading of the object (1) by the die (8) is performed on both sides of and in the vicinity of a worn region (18) which faces towards the die (8),

that the object is bent by the loading, in a first loading step, around a bearing surface (3) of the matrix (2), which surface (3) lies opposite the one worn region (18), whereby material from which the object (1) is made is displaced into the one worn region (18), and

that a further worn region (17) of the object (1), which region faces towards the matrix (2), is pressed into a shaping member (15) by the loading in a subsequent second loading step, for so long as until the further worn region (17) has assumed the shape of the said shaping member (15), and

that the one worn region (18) of the object (1) subsequently is mechanically machined.

FIG.1

FIG. 2